Europäisches Patentamt

European Patent Office

Office européen des brevets

(11) Veröffentlichungsnummer: **0 258 763 B1**

# EUROPÄISCHE PATENTSCHRIFT

(45) Veröffentlichungstag der Patentschrift: **07.08.91**

(21) Anmeldenummer: **87112184.4**

(22) Anmeldetag: **21.08.87**

(51) Int. Cl.⁵: **B23B 31/40**, B23B 31/12, H02K 15/02

---

(54) Verfahren zur Bearbeitung der Oberfläche eines hohlen Werkstückes.

---

(30) Priorität: **04.09.86 DE 3630198**

(43) Veröffentlichungstag der Anmeldung:
**09.03.88 Patentblatt 88/10**

(45) Bekanntmachung des Hinweises auf die
Patenterteilung:
**07.08.91 Patentblatt 91/32**

(84) Benannte Vertragsstaaten:
**CH DE IT LI**

(56) Entgegenhaltungen:
**DE-A- 2 137 754      FR-A- 1 135 272
GB-A- 110 225       US-A- 1 808 288
US-A- 1 944 255      US-A- 2 738 980**

(73) Patentinhaber: **Siemens Aktiengesellschaft
Wittelsbacherplatz 2
W-8000 München 2(DE)**

(72) Erfinder: **Schmidt, Helmut
Unterer Weinberg 44
W-8701 Reichenberg(DE)**

## Beschreibung

Die Erfindung bezieht sich auf ein Verfahren zur Bearbeitung der Oberfläche eines hohlen Werkstückes, insbesondere der Außen-Umfangsfläche bzw. der Innen-Umfangsfläche der hohlzylindrischen Läuferglocke eines Außenläufermotors, mittels eines unter Druck an die Außenfläche oder Innenfläche angesetzten Bearbeitungswerkzeuges gemäß Oberbegriff des Anspruchs 1 bzw. des Anspruchs 2; ein Verfahren gemäß Oberbegriff des Anspruchs 1 bzw. des Anspruchs 2 ist durch die US-A-2 738 980 bzw. die GB-A-110 225 bekannt.

Im bekannten Fall der US-A-2 738 980 sind in axialen Nuten eines konischen Montagestiftes geführt Abstützkeile eingesteckt, die mittels einer auf das verjüngte Ende des Montagestiftes aufschraubbaren Zentralschraube über die Steigung des Montagestiftes gemeinsam nach radial außen gegen die Innenfläche des hohlen Werkstückes angedrückt werden können.

Im bekannten Fall der GB-A-110 225 sind in axialen Nuten der Aufnahmevorrichtung Abstützkeile axial verschiebbar gelagert, die mit Endanschlägen axial gegen einen geschlossenen Ring andrükken, der dadurch als Abstützung zwischen eine konische Oberfläche des hohlen Werkstücks und die diesem zugewandten Druckflächen gepreßt wird.

Gemäß vorliegender Erfindung soll der Aufwand für die Oberflächenabstützung vermindert und auch bei ungleicher Oberflächenbeschaffenheit der Abstützungsfläche einem hohen Bearbeitungsdruck widerstanden werden können.

Das erfindungsgemäße Verfahren kann schnell mit einfachen Mitteln, z.B. ohne aufwendige Schraubenanbringung und Schraubenbetätigung, bei Bearbeitung der Außenfläche in das Innere des Werkstückes eingebracht bzw. bei Bearbeitung der Innenfläche in radialem Abstand über das zu bearbeitende Werkstück übergestülpt und nach dem Bearbeitungsvorgang entfernt und zur Abstützung des nächsten zu bearbeitenden Werkzeuges wiederverwendet werden, wobei die Abstützung der zu bearbeitenden Fläche gegenüber den bei der Bearbeitung entstehenden Reaktionskräften unter toleranzentsprechender Abstützung und unter Beibehaltung der im Abstützbereich vorhandenen Flächen-Formabweichungen erfolgen kann. Eine derartige toleranzentsprechende Abstützung ist umso besser möglich, je mehr Abstützteile über den Umfang verteilt vorgesehen sind.

Bei Bearbeitung der Außenfläche bzw. Innenfläche der Läuferglocke eines Außenläufermotors kann die achszentrische Abstützung der Abstützteile in besonders einfacher Weise durch direkte Anlage an die in der Läuferglocke zentrisch gehalterte Motorwelle erfolgen.

Die vorteilhafte Selbsthemmung der gegen die abzustützenden Flächen des Werkstückteiles anzudrückenden Abstützteile kann am besten durch entsprechende keilförmige Ausbildung der Abstützteile erfolgen, wobei diese entweder durch eine axiale Schub-oder durch eine Drehbewegung gegen die abzustützenden Flächen angedrückt werden. Im einzelnen ist dazu nach einer ersten Ausgestaltung der Erfindung vorgesehen, daß die Abstützteile mit entgegen ihrer Schubrichtung auf das hohle Werkstück zu konisch ansteigender Außenkeilfläche in dem Halteteil versehene, axial geführte Abstützkeile ausgebildet sind. Nach einer weiteren Ausgestaltung ist vorgesehen, daß die Abstützteile entweder als drehbar in dem Halteteil angeordnete, radial gerichtete Exzenterscheiben bzw. als drehbar in dem Halteteil angeordnete, axial gerichtete Exzenterscheiben ausgebildet sind. Um mit Sicherheit ein gleichmäßiges Andrücken sämtlicher über den Umfang verteilter Abstützteile an die abzustützende Fläche gewährleisten zu können, ist vorgesehen, daß die Abstützteile jeweils durch eine Vorspannfeder im Sinne eines gleichen Erstandruckes an die abzustützende Oberfläche vorgespannt sind.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

Fig. 1 in einem axialen Längsschnitt den Läufer eines dauermagneterregten elektromotorischen Plattenspeicherantriebes;

Fig. 2 in einem axialen Längsschnitt das Halteteil einer Abstützvorrichtung ohne Abstützteile;

Fig. 3 die stirnseitige Draufsicht auf das Halteteil gemäß Fig. 2, jedoch mit eingesetzten, axial im Halteteil geführten Abstützteilen;

Fig. 4 ein komplettes Abstützteil mit axial geführten und achszentrisch an der Welle einer Läuferglocke abgestützten Abstützkeilen;

Fig. 5 ein komplettes Abstützteil mit axial geführten Abstützkeilen und zusätzlichen Zwischenlageteilen zwischen abzustützendem Werkstück und Abstützkeil;

Fig. 6 eine konzentrisch mit radialem äußeren Zwischenraum zu einem hohlzylindrischen Werkstück angeordnete Aufnahmevorrichtung mit einer in den äußeren Zwischenraum eingeführten, an die Außen-Umfangsfläche des Werkstückes andrückbaren Abstützvorrichtung.

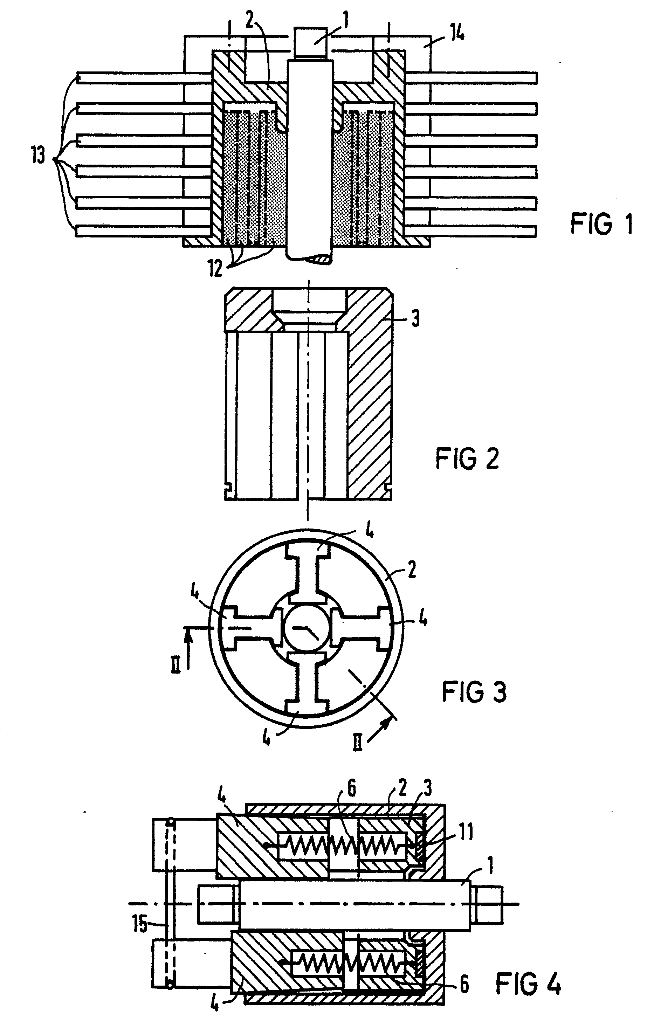

FIG 1 zeigt den Außenläufer eines innerhalb des Speicherraumes anzuordnenden elektromotorischen Plattenspeicherantriebes mit Dauermagneterregung. An der Innen-Umfangsfläche der das hohle Werkstück darstellenden Läuferglocke 2 sind SinterFerrit-Magnete gehalten; an der Außen-Umfangsfläche der Läuferglocke 2 sind mittels eines Spannringes 14 Speicherplatten 13 befestigt. Zentrisch zur Läuferglocke 2 ist die Motorwelle 1 angeordnet.

Fig. 2, 3 zeigen Einzelheiten der Abstützvorrichtung, die vor dem Einbau der Magnete 12 und vor der Befestigung der Speicherplatten 13 in dem hohlzylindrischen Innenraum der Läuferglocke 2 zur Abstützung der Innen-Umfangsfläche der Läuferglocke 2 eingeführt wird. Damit bei der Bearbeitung der AußenUmfangsfläche der Läuferglocke 2 aufgrund des Bearbeitungsdruckes eines radial anzusetzenden Schleifwerkzeuges Verformungen der Läuferglocke 2 vermieden werden können.

Das in Fig. 2 in axialem Längsschnitt gemäß dem Schnittverlauf II-II in Fig. 3 ohne Abstützteile dargestellte Halteteil 3 ist derartig ausgebildet, daß gemäß Fig. 3,4 vier am Umfang verteilte Abstützkeile 4 schienenartig axial geführt vom stirnseitig offenen Ende des Halteteiles 3 eingeführt und gegen ein Herausfallen durch einen Federring 15 zum stirnseitig offenen Ende des Halteteiles 3 gesichert sind.

Wie aus Fig. 4 ersichtlich, weisen die vier Abstützkeile 4 eine entgegen ihrer Einschubrichtung in das Halteteil 3 konisch ansteigende Außenkeilfläche auf; radial innen sind die Abstützkeile 4 achszentrisch an der Motorwelle 1 der Läuferglocke 2 abgestützt. Die Abstützkeile 4 sind jeweils durch eine Vorspannfeder 6 im Sinne eines gleichen Erstandruckes an die abzustützende Innen-Umfangsfläche vorgespannt. Das Halteteil 3 wird in seiner Einschubendlage durch einen im stirnseitigen Topfboden des Halteteiles 3 gehaltenen Magnetring 11 an der gegenüberliegenden Topfboden-Stirnseite der metallenen Läuferglocke 2 fixiert.

Fig. 4 zeigt die in den Innenraum der Läuferglocke 2 eingeführte Abstützvorrichtung 2,3 mit ihren über den Umfang verteilten und gegen die Innen-Umfangsfläche der Läuferglocke 2 andrükkenden einzelnen Abstützkeilen 4. Es ist ersichtlich, daß im dargestellten Ausführungsbeispiel der untere Abstützkeil 4 weiter axial eingedrückt ist als der obere Abstützteil 4; dies zeigt z.B., daß durch das erfindungsgemäße Verfahren unterschiedliche Toleranzen, z.B. in der Wandstärke der Läuferglocke 2, derart berücksichtigt werden, daß bei z.B. angenommener dünnerer Wandstärke der Läuferglocke 2 der entsprechende, innen an der Motorwelle 1 sich in diesem Bereich abstützende untere Abstützkeil weiter axial eindringt als der obere Abstützkeil.

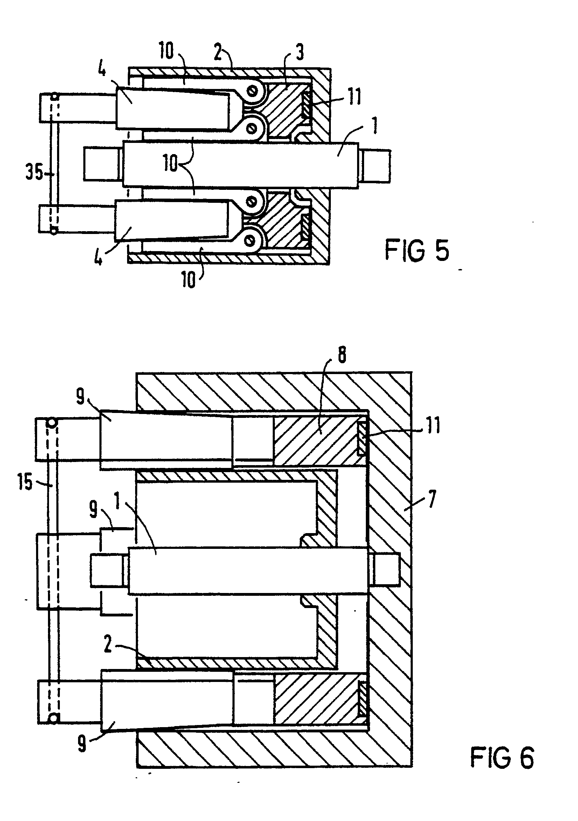

Fig. 5 zeigt den grundsätzlich gleichen Aufbau der Abstützvorrichtung wie in Fig. 2,3, jedoch sind zur Vermeidung einer Riefenbildung beim axialen Einführen der Abstützkeile 4 zwischen diesen und der abzustützenden Innen-Umfangsfläche der Läuferglocke 2 im Halteteil 3 entsprechend drehbar angeordnete Zwischenlageteile 10 derart vorgesehen, daß eine axiale Reibbewegung nur zwischen der Außenfläche der Abstützkeile 4 und der Innenfläche der Zwischenlageteile 10, jedoch nicht zwischen den axial bewegten Abstützkeilen 4 und der InnenUmfangsfläche selbst stattfinden können.

Fig. 7 zeigt eine Ausführung zur Abstützung der Läuferglocke 2 an ihrer Außen-Umfangsfläche für den Fall, daß eine Bearbeitung der Innen-Umfangsfläche der Läuferglocke vorgesehen ist. Dazu sind zentrisch an der Motorwelle 1 abgestützt eine Aufnahmevorrichtung 7 mit einem radialen Zwischenraum zwischen der Außen-Umfangsfläche der Läuferglocke 2 und der Innen-Umfangsfläche der Aufnahmevorrichtung 7 und eine in diesen Zwischenraum von einer axial offenen Stirnseite Abstützvorrichtung mit einem in seiner Endlage durch einen Magnetring 11 fixierbares Halteteil 8 und in dem Halteteil 8, ähnlich wie bei der Ausführung gemäß Fig. 3, axial geführten Abstützkeilen 9 mit jeweils äußerer konisch ansteigender Keilfläche vorgesehen.

In sämtlichen Ausführungsbeispielen ist die Steigung der Keilflächen jeweils derart ausgebildet, daß im angedrückten Zustand die Abstützteile selbsthemmend in ihrer Abstützlage gehalten sind.

Es dürfte ersichtlich sein, daß mit dem erfindungsgemäßen Verfahren auf einfache Weise und auch bei ungleicher bzw. unrunder Oberfläche der als Abstützung dienenden Teile des zu bearbeitenden Werkstückes die Rundflächen der Außen- bzw. Innen-Umfangsfläche eines zylinderförmigen Werkstückes, z.B. in Form der Läuferglocke eines Außenläufermotors, mittels eines unter radialem Druck angesetzten Bearbeitungswerkzeuges, z.B. eines Dreh- oder Schleifwerkzeuges, rundbearbeitet werden können, ohne daß die bearbeitete Fläche durch Reaktionskräfte, z.B. aufgrund des Bearbeitungsdruckes oder durch die Unwucht des bei der Bearbeitung rotierenden Werkstückes in unerwünschter Weise verformt werden kann.

**Patentansprüche**

1. Verfahren zur Bearbeitung der Außenfläche eines hohlen Werkstückes, insbesondere der Außen-Umfangsfläche der hohlzylindrischen Läuferglocke eines Außenläufermotors, mittels eines unter Druck an die Außenfläche angesetzten Bearbeitungswerkzeuges und einer in das Innere des hohlen Werkstückes (Läuferglocke 2) einführbaren Abstützvorrichtung (3,4) mit in einem Halteteil (3) geführten, über dessen Umfang verteilten und gegen die Innenfläche des hohlen Werkstückes (Läuferglocke 2) andrückbaren Abstützteilen (Abstützkeilen 4), **dadurch gekennzeichnet,** daß die Abstützteile (Abstützkeile 4) unabhängig voneinander und achszentrisch abgestützt zu dem hohlen Werkstück, insbesondere der hohlzylindrischen Läuferglocke (2) des Außenläufermotors, axial verschoben sowie in ihrer Endlage selbsthemmend fixiert werden.

2. Verfahren zur Bearbeitung der Innenfläche eines hohlen Werkstückes, insbesondere der Innen-Umfangsfläche der hohlzylindrischen Läuferglocke eines Außenläufermotors, mittels eines unter Druck an die Innenfläche angesetzten Bearbeitungswerkzeuges, mit einer mit radialem äußeren Zwischenraum über das Werkstück (Läuferglocke 2) stülpbaren Aufnahmevorrichtung (7) für das hohle Werkstück (Läuferglocke 2) und mit einer in den Zwischenraum einführbaren Abstützvorrichtung (8,9) mit über deren Umfang verteilten, gegen die Außenfläche des hohlen Werkstückes (Läuferglocke 2) andrückbaren Abstützteilen (Abstützkeilen 9), **dadurch gekennzeichnet,** daß die Abstützteile (Abstützkeile 9) unabhängig voneinander und achszentrisch abgestützt zu dem hohlen Werkstück, insbesondere der hohlzylindrischen Läuferglocke (2) des Außenläufermotors, in einem Halteteil (8) axial verschoben sowie in ihrer Endlage selbsthemmend fixiert werden.

3. Verfahren zur Bearbeitung der Außenflache der Läuferglocke (2) eines Außenläufermotors nach Anspruch 1, **dadurch gekennzeichnet,** daß die Abstützteile (Abstützkeile 4) achszentrisch an der Motorwelle (1) der Läuferglocke (2) abgestützt werden (Fig. 3-6).

4. Verfahren zur Bearbeitung der Innenfläche der Läuferglocke (2) eines Außenläufermotors nach Anspruch 1, **dadurch gekennzeichnet,** daß die Aufnahme-vorrichtung (7) achszentrisch an der Motorwelle (1) der Läuferglocke (2) abgestützt werden (Fig .7).

5. Verfahren nach einem der Ansprüche 1 - 4, **dadurch gekennzeichnet,** daß die Abstützteile mit entgegen ihrer Schubrichtung auf das hohle Werkstück (Läuferglocke 2) zu konisch ansteigender Außenkeilfläche in dem Halteteil (3 bzw.8) versehene, axial geführte Abstützkeile (4 bzw.9) ausgebildet werden (Fig. 3-5,7).

6. Verfahren nach einem der Ansprüche 1 - 5, **dadurch gekennzeichnet,** daß die Abstützteile jeweils durch eine Vorspannfeder (6) im Sinne eines gleichen Erstandruckes an die abzustützende Oberfläche vorgespannt werden (Fig. 4).

7. Verfahren nach einem der Ansprüche 1 - 6, **dadurch gekennzeichnet,** daß zwischen den Abstützteilen und der abzustützenden Oberfläche des hohlen Werkstückes (Läuferglocke 2) und/oder dem Halteteil (3) bzw. der Motorwelle (1) bzw. der Aufnahmevorrichtung (7) Zwischenlageteile (10) angeordnet werden (Fig. 5).

## Claims

1. Method for machining the outer surface of a hollow work piece, in particular the outer peripheral surface of the hollow-cylindrical rotor bell of an external rotor motor, by means of a machining tool, which is set, under pressure, onto the outer surface, and a supporting arrangement (3, 4) which can be introduced into the interior of the hollow work piece (rotor bell 2) and which has supporting portions (supporting wedges 4) which are guided in a holding portion (3), are distributed over the periphery of the latter and can be pressed against the inner surface of the hollow work piece (rotor bell 2), characterised in that the supporting portions (supporting wedges 4) are supported in relation to the hollow work piece, in particular the hollow-cylindrical rotor bell (2) of the external rotor motor, independently of each other and about a central axis, are axially displaced and are also fixed in their final position in a self-locking manner.

2. Method for machining the inner surface of a hollow work piece, in particular the inner peripheral surface of the hollow-cylindrical rotor bell of an external rotor motor, by means of a machining tool, which is set, under pressure, onto the inner surface, has a receiving arrangement (7) for the hollow work piece (rotor bell 2) which can be put over the work piece (rotor bell 2) with radial outer interspace and has a supporting arrangement (8, 9), which can be introduced into the interspace, with supporting portions (supporting wedges 9) which are distributed over the periphery of said supporting arrangement and which can be pressed against the outer surface of the hollow work piece (rotor bell 2), characterised in that the supporting portions (supporting wedges 9) are supported in relation to the hollow work piece, in particular the hollow-cylindrical rotor bell (2) of the external rotor motor, independently of each other and about a central axis, are axially displaced in a holding portion (8) and are also fixed in their final position in a self-locking manner.

3. Method for machining the outer surface of the rotor bell (2) of an external rotor motor according to claim 1, characterised in that the supporting portions (supporting wedges 4) are supported about a central axis on the motor shaft (1) of the rotor bell (2) (Figures 3-6).

4. Method for machining the inner surface of the rotor bell (2) of an external rotor motor according to claim 1, characterised in that the receiving arrangement (7) is supported about a central axis on the motor shaft (1) of the rotor bell (2) (Figure 7).

5. Method according to one of the claims 1-4, characterised in that the supporting portions are formed as axially guided supporting wedges (4 or 9) which, in the holding portion (3 or 8), are provided with outer wedge surface which rises conically in opposition to the direction of push of said portions towards the hollow work piece (rotor bell 2) (Figures 3-5, 7).

6. Method according to one of the claims 1 - 5, characterised in that the supporting portions are each pre-tensioned by a pre-tensioning spring (6) for the purposes of a uniform starting pressure against the surface to be supported (Figure 4).

7. Method according to one of the claims 1 to 6, characterised in that intermediate layer portions (10) are arranged between the supporting portions and the surface to be supported of the hollow work piece (rotor bell 2) and/or the holding portion (3) or the motor shaft (1) or the receiving arrangement (7) respectively (Figure 5).

**Revendications**

1. Procédé d'usinage de la surface extérieure d'une pièce creuse, notamment de la surface périphérique extérieure du capot cylindrique de l'induit d'un moteur à induit extérieur, au moyen d'un outil d'usinage appliqué sous pression à la surface extérieure et d'un dispositif d'appui (3, 4), susceptible d'être introduit à l'intérieur de la pièce creuse (capot de l'induit 2) et qui est muni de pièces d'appui (coins d'appui 4) guidées dans une pièce de maintien (3), réparties sur son pourtour et susceptibles d'être appliquées sur la surface intérieure de la pièce creuse (capot d'induit 2), caractérisé en ce que les pièces d'appui (coins d'appui 4) sont, indépendamment les unes des autres et en s'appuyant de manière centrée sur l'axe, déplacées axialement par rapport à la pièce creuse, notamment par rapport au capot cylindrique creux de l'induit (2) du moteur à induit extérieur, et sont immobilisées en leur position d'extrémité en s'y bloquant automatiquement.

2. Procédé d'usinage de la surface intérieure d'une pièce creuse, notamment de la surface périphérique intérieure du capot cylindrique de l'induit d'un moteur à induit extérieur, au moyen d'un outil d'usinage qui est appliqué sous pression à la surface intérieure et qui est muni d'un dispositif de réception (7) de la pièce creuse (capot d'induit 2) susceptible de coiffer, avec un intervalle radial extérieur, la pièce (capot d'induit 2) et d'un dispositif d'appui (8, 9) qui peut être introduit dans l'intervalle et qui est muni de pièces d'appui (coins d'appui 9) qui sont réparties sur son pourtour et qui peuvent être appliquées sur la surface extérieure de la pièce creuse (capot d'induit 2), caractérisé en ce que les pièces d'appui (point d'appui 9) sont, indépendamment les unes des autres et en s'appuyant de manière centrée sur l'axe, déplacées axialement par rapport à la pièce creuse, notamment par rapport au capot cylindrique creux de l'induit (2) du moteur à induit extérieur, dans une pièce de maintien (8) et sont immobilisées en leur position d'extrémité en s'y bloquant automatiquement.

3. Procédé d'usinage de la surface extérieure du capot d'induit (2) d'un moteur à induit extérieur suivant la revendication 1, caractérisé en ce que les pièces d'appui (coins d'appui 4) sont appliquées avec centrage sur l'axe, sur l'arbre du moteur (1) du capot d'induit (2) (figures 3 à 6).

4. Procédé d'usinage de la surface intérieure du capot d'induit (2) d'un moteur à induit extérieur suivant la revendication 1, caractérisé en ce que le dispositif de réception (7) prend appui avec centrage sur l'arbre du moteur (1) du capot de l'induit (2) (figure 6).

5. Procédé suivant l'une des revendications 1 à 4, caractérisé en ce que les pièces d'appui sont constituées sous forme de coins d'appui (4 ou 9), guidés axialement et munis dans la pièce de maintien (3 et 8) de surfaces extérieures cunéiformes s'agrandissant coniquement, dans le sens opposé à leur sens d'enfilement sur la pièce creuse (capot d'induit 2) (figures 3 à 5, 6).

6. Procédé suivant l'une des revendications 1 à 5, caractérisé en ce que les pièces d'appui sont mises sous tension préalable par un ressort de mise sous tension préalable (6), en vue d'obtenir une première pression d'application identique sur les surfaces à soutenir, (figure 4).

7. Procédé suivant l'une des revendications 1 à 6, caractérisé en ce que des pièces intermédiaires (10) sont disposées entre les pièces d'appui et les surfaces à soutenir de la pièce creuse (capot d'induit 2) et/ou la pièce de maintien (3) ou l'arbre du moteur (1) ou le dispositif de réception (7) (figure 5).

EP 0 258 763 B1

FIG 1

FIG 2

FIG 3

FIG 4

7

FIG 5

FIG 6